# EUROPEAN PATENT APPLICATION

(11) **EP 4 657 822 A1**
(43) Date of publication of application: **03.12.2025**
(21) Application number: 23920847.3
(22) Date of filing: 30.11.2023
(51) Int. Cl.: H04L 45/02

(54) **SATELLITE NETWORK COMMUNICATION METHOD, APPARATUS, DEVICE, AND MEDIUM**

(30) Priority: 08.02.2023 CN 202310147713
(71) Applicant: ZTE CORPORATION, Shenzhen, Guangdong 518057 (CN)
(72) Inventor: WU, Haisheng, Shenzhen, Guangdong 518057 (CN); ZHANG, Chaofeng, Shenzhen, Guangdong 518057 (CN); ZHU, Chun, Shenzhen, Guangdong 518057 (CN)
(74) Representative: Ziebig Hengelhaupt Intellectual Property Attorneys Patentanwaltskanzlei PartGmbB
(86) International application number: PCT/CN2023/135590
(87) International publication number: WO 2024/164658

(57) **Abstract**

Disclosed in the present application are a satellite network communication method, apparatus, device, and a medium, pertaining to the technical field of satellite communication. In a session negotiation stage between a path computation client and a path computation unit, by exchanging PCEP session initiation messages, it is negotiated whether to support a forwarding path issuing capability based on time slices; and after determining that the path computation client and the path computation unit both support the forwarding path issuing capability based on time slices, a PCEP session for satellite network communication is established. Thereby, provided are the capability to issue path-forwarding information according to different time slices, and the capability to negotiate time slices between a controller on a ground/high-orbit satellite and the satellite. After successful capability negotiation, subsequent message exchange and information transmission between the path computation client and the path computation unit can be carried out with the forwarding path issuing capability based on time slices.

## Description

### CROSS REFERENCE TO RELATED APPLICATIONS

This application is based upon and claims priority to Chinese Patent Application No. 202310147713.X, filed on February 8, 2023, the entire contents of which are incorporated herein by reference.

### TECHNICAL FIELD

The present application relates to the technical field of satellite communication, and in particular to a satellite network communication method, a satellite network communication apparatus, a satellite network communication device, and a computer-readable storage medium.

### BACKGROUD

The space-air-ground integrated network architecture is one of the core directions of 6G (the sixth generation mobile communication standard) and is listed as one of the seven key network requirements by the ITU (International Telecommunication Union). In the space-air-ground integrated network architecture of 6G, on the basis of the ground cellular mobile network, characteristics such as wide coverage, flexible deployment and efficient broadcasting of broadband satellite communication ae combined, land, sea and air are all covered by deep integration of a variety of heterogeneous networks, so that new opportunities are provided for ocean, airborne, cross-border, and air-ground integration markets. The space-air-ground integrated network is formed by interconnection of space-based information network, ground Internet and mobile communication network. However, in order to apply the existing bearer technology to a satellite network, the problem in information transmission (which interface and protocols are to be used) needs to be solved firstly, and then the problems in forwarding of forwarding table entries, collection of routing information, selection of routing algorithms, etc. need to be solved. At present, there are almost no communication technology solutions for satellite networks, i.e., solutions in which related technology is applied to satellite network communications.

### SUMMARY

The present application mainly aims to provide a satellite network communication method, a satellite network communication apparatus, a satellite network communication device, and a computer-readable storage medium, which is intended to solve the technical problem that it is difficult to implement information transmission in satellite communication in the related art.

In order to achieve the above-mentioned purpose, the present application provides a satellite network communication method, the method includes: negotiating whether to support a forwarding path issuing capability based on time slices by transmitting PCEP session initiation messages mutually between a path computation client and a path computation element in a session negotiation stage of the two; and establishing, upon the condition that both the path computation client and the path computation element are determined to support the forwarding path issuing capability based on time slices, a path computation element communication protocol called PCEP session for satellite network communication.

The present application further provides a satellite network communication apparatus, the satellite network communication apparatus includes: a session negotiation module, configured to negotiate whether to support a forwarding path issuing capability based on time slices by transmitting PCEP session initiation messages mutually between a path computation client and a path computation element in a session negotiation stage of the two; and a session establishment module, configured to establish, upon the condition that both the path computation client and the path computation element are determined to support the forwarding path issuing capability based on time slices, a path computation element communication protocol called PCEP session for satellite network communication.

The present application further provides a satellite network communication device, the satellite network communication device includes a memory, a processor, and a computer program stored on the memory and executable on the processor, the computer program is configured to implements steps of the above-mentioned satellite network communication method.

The present application further provides a computer-readable storage medium, the computer-readable storage medium stores a computer program, the computer program is configured to implements steps of the above-mentioned satellite network communication method.

### BRIEF DESCRIPTION OF THE DRAWINGS

FIG. 1 is a schematic structural diagram of an operating device in a hardware operating environment according to embodiments of the present application.
FIG. 2 is a schematic diagram of a routing algorithm based on discrete topology.
FIG. 3 is a schematic flow chart of a satellite network communication method according to embodiments of the present application.
FIG. 4 is a schematic procedural diagram of establishing a PCEP session between PCEP peers.
FIG. 5 is a schematic diagram of a scenario for negotiating whether to support time slice capability between a satellite and a controller of a satellite network communication method according to embodiments of the present application.
FIG. 6 is a schematic diagram of a scenario in which a controller issues an SR-MPLS TE tunnel by PCEP of a satellite network communication method according to embodiments of the present application.
FIG. 7 is a schematic diagram of a link failure scenario of a satellite network communication method according to embodiments of the present application.
FIG. 8 is a schematic diagram of a satellite network communication apparatus according to embodiments of the present application.

The implementations, functional features and advantages of the present application will be further illustrated in conjunction with the embodiments and accompanying drawings.

### DETAILED DESCRIPTION

It should be understood that the specific embodiments described here are merely used to illustrate the present application and not intended to be limiting.

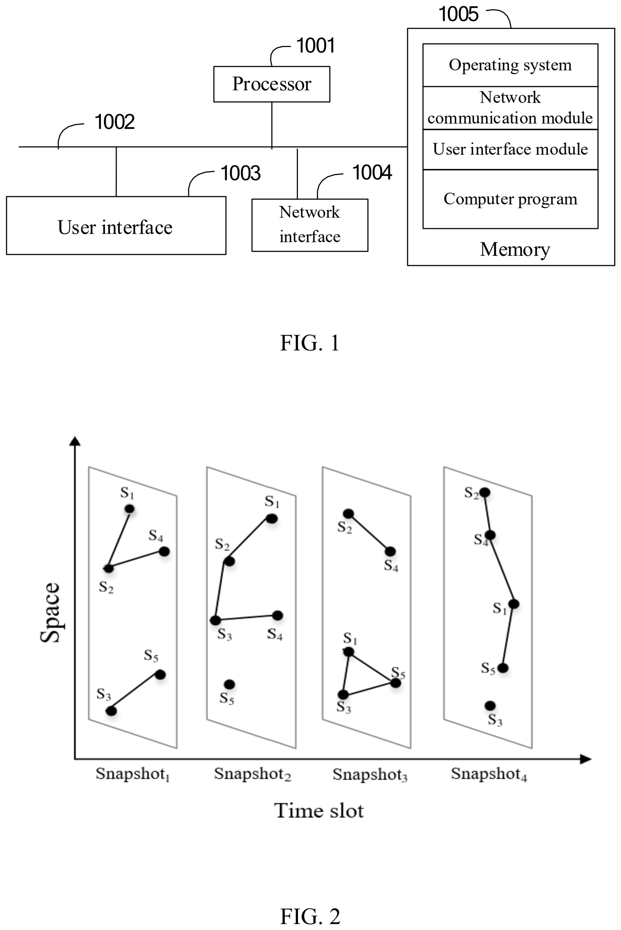

Referring to FIG. 1, which is a schematic structural diagram of an operating device in a hardware operating environment according to embodiments of the present application.

As shown in FIG. 1, the operating device may include a processor 1001 such as a central processing unit (CPU), a communication bus 1002, a user interface 1003, a network interface 1004, and a memory 1005. The communication bus 1002 is used to enable connection and communication among these components. The user interface 1003 may include a display and an input unit such as a keyboard, and the user interface 1003 may further include a standard wired and wireless interfaces. The network interface 1004 may include a standard wired and wireless interface (such as a wireless fidelity (WI-FI) interface). The memory 1005 may be a high-speed random access memory (RAM), or a stable non-volatile memory (NVM) such as a disk storage. The memory 1005 may further be a storage device independent of the above-mentioned processor 1001.

Those skilled in the art can understand that, the structure as shown in FIG. 1 does not constitute a limitation on the operating device, and the operating device may include more or less components than those illustrated, a combination of certain components, or different arrangement of components.

As shown in FIG. 1, the memory 1005 as a storage medium may include an operating system, a data storage module, a network communication module, a user interface module, and a computer program.

In the operating device shown in FIG. 1, the network interface 1004 is mainly used for data communication with other devices; the user interface 1003 is mainly used for data interaction with users; the processor 1001 and the memory 1005 in the operating device of the present application may be disposed in the operating device, and the operating device calls a computer program stored in the memory 1005 by the processor 1001, and performs the following operations: in a session negotiation stage of a path computation client and a path computation element, by transmitting PCEP (Path Computation Element Communication Protocol) session initiation messages mutually between the path computation client and the path computation element, it is negotiated whether to support a forwarding path issuing capability based on time slices; and when it is determined that both the path computation client and the path computation element support the forwarding path issuing capability based on time slices, a PCEP session for satellite network communication is established.

In one embodiment, the processor 1001 may invoke a computer program stored in the memory 1005 and perform the following operations. Negotiating whether to support the forwarding path issuing capability based on time slices by transmitting PCEP session initiation messages mutually includes: a target TLV (Tag-Length-Value) packet is carried in a PCEP session initiation message, and it is negotiated whether to support the forwarding path issuing capability based on time slices; wherein the target TLV packet is pre-extended to form a target flag bit, and the target flag bit is used to indicate whether a path computation client or a path computation element supports the forwarding path issuing capability based on time slices.

In one embodiment, the processor 1001 may invoke a computer program stored in the memory 1005 and perform the following operations. Negotiating whether to support the forwarding path issuing capability based on time slices includes: when it is determined that target flag bits of target TLV packets in PCEP session initiation messages of both the path computation client and the path computation element include preset flags respectively, the path computation client and the path computation element are determined to have negotiated to both support the forwarding path issuing capability based on time slices.

In one embodiment, the processor 1001 may invoke a computer program stored in the memory 1005 and further perform the following operations: corresponding to that the forwarding path issuing capability is issued or reported between the path computation client and the path computation element, time slot parameter information which is able to carry the forwarding path issuing capability is provided by means of extension.

In one embodiment, the processor 1001 may invoke a computer program stored in the memory 1005 and perform the following operations. Providing the time slot parameter information, which is able to carry the forwarding path issuing capability, by means of extension includes: a timestamp TLV packet is added to a label switched path object which is carried in a label switched path initiate request message, a path state report message or a path update request message; wherein the timestamp TLV packet is used to designate the time slot parameter information, and the time slot parameter information at least includes a begin time and an end time of a valid period of the forwarding path issuing capability.

In one embodiment, the processor 1001 may invoke a computer program stored in the memory 1005 and further perform the following operations: after a label switched path initiate request message is received by the path computation client from the path computation element, the label switched path initiate request message is parsed to obtain timeslot parameter information; and when a valid period of the forwarding path issuing capability is determined to end based on the time slot parameter information, a path corresponding to the label switched path initiate request message is determined to be invalid.

In one embodiment, the processor 1001 may invoke a computer program stored in the memory 1005 and further perform the following operations: when the path computation element determines a link failure, a time slice where a failed link is located is determined and the number of link failures in the time slice is computed; and when it is determined that the number of link failures exceeds a preset threshold, a forwarding path issuing capability passing through the failed link within the time slice is adjusted, and an adjusted forwarding path issuing capability is sent to the path computation client by means of a path update request message.

At present, SDN (Software Defined Network) is a new network design concept, in which the core concept is that a control plane is separated from a forwarding plane in a network hardware device, and a centralized control system (SDN controller) performs elastic management and flexible control on a network by the control plane, so that various service applications can meet the forwarding requirements of different service systems for the network by invoking relevant interface provided by the controller. At the same time, by means of flexible programmable capability of the centralized control system, the network mode and strategy can be dynamically customized to provide good support for service innovation and application innovation.

At present, an interactive interface between the SDN controller and network device includes openflow (a network communication protocol belonging to data link layer), netconfig (Network Configuration Protocol), PCEP (Path Computation Element Communication Protocol), BGP-LS (Border Gateway Protocol Link-state, a way of collecting network topology), etc. The PCEP was proposed by the PCE working group of IETF (The Internet Engineering Task Force) in 2006 for applications such as MPLS (Multi-Protocol Label Switching) network inter-domain traffic engineering, and PCEP which used as a standard protocol for path information transmission is proposed to support centralized path computation.

Referring to FIG. 2, FIG. 2 is a schematic diagram of a routing algorithm based on discrete topology. The space-based information network consists of a series of high-orbit, medium-orbit and low-orbit satellites, and inter-satellite communication is implemented by using inter-satellite data links among satellites. Due to the topological changes caused by high-speed movement of satellites, the routing algorithms used in traditional ground networks can be hardly suitable for satellite networks. At present, the commonly used routing algorithm is the routing algorithm based on discrete topology as shown in FIG. 2. According to the routing algorithm based on discrete topology, time discretization is adopted, a satellite motion period is divided into several time slots according to the periodic law of satellite motion, the network topology remains unchanged within each time slot, and a dynamic network is mapped into time-discrete network snapshots.

Therefore, in the field of space-air-ground integrated network communication, especially communication between satellites and ground devices, in particular to the PCEP technology, the space-air-ground integrated network lacks a method for message communication between packet-forwarding devices on commercial satellites. Openflow interfaces are adopted currently, but openflow has the disadvantages of low performance, compatibility and scalcapability. PCEP and Netconfig are mainly used to issue entries on the ground, since PCEP is highly scalable and can transmit forwarding entry information with status, PCEP technology may be applied to satellite networks, but there is currently a blank in this area.

In the present application, by extending the PCEP, the satellite path-forwarding information within a certain time slice can be accurately identified, and the path-forwarding information of a certain time slice can be accurately and dynamically adjusted, so that a ground controller or a high-orbit satellite controller can perform centralized path computation, update path information, etc., thereby solving the technical problem that it is difficult to implement information transmission in satellite communications in conventional technology, overcoming the defects that a current low-orbit satellite has a small capacity and cannot perform frequent path computation, and also overcoming the defect that a satellite cannot respond to a link change timely.

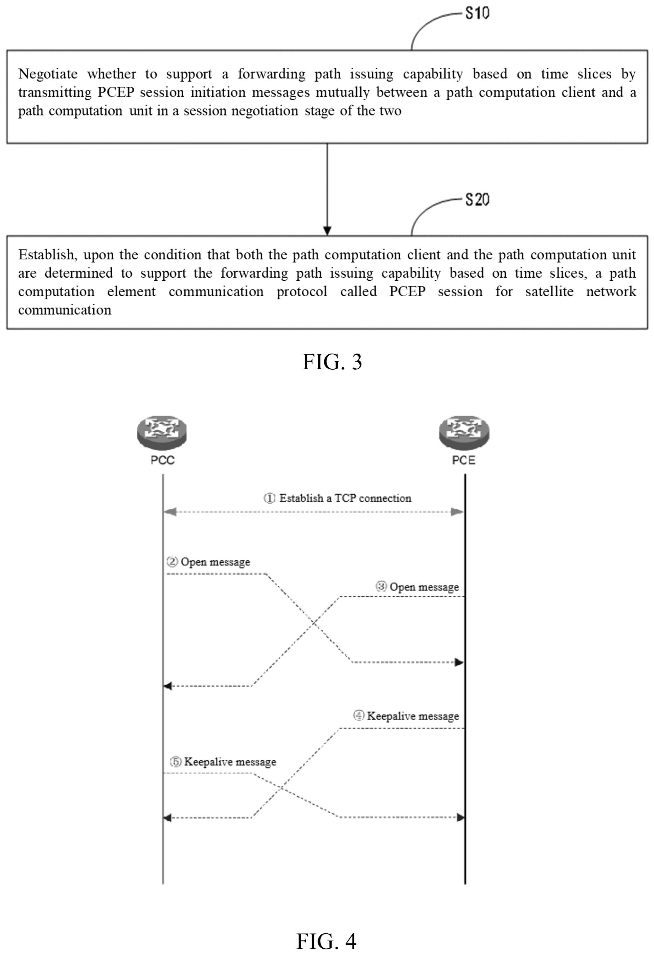

Referring to FIG. 3, in one embodiment of a satellite network communication method, the method include the followings steps S10 and S20.

At step S10, in a session negotiation stage of a path computation client and a path computation element, it is negotiated whether to support a forwarding path issuing capability based on time slices by transmitting PCEP session initiation messages between the two.

In this embodiment, there is provided a satellite network communication method, which can be applied in a space-ground-air integrated network, particularly in a router/switch of a low-orbit satellite constellation with inter-satellite links.

The two sides which establish a PCEP session are called PCEP peers. An Open message (PCEP session initiation message) is a message sent between PCEP peers to establish and maintain a PCEP session. The Open message is the first PCEP message sent to the PCE by the PCC or sent to the PCC by the PCE. During the PCEP session establishment stage, the PCEP peers negotiate on PCEP session parameters carried in the Open message. If both peers reach a consensus on these parameters, the PCEP session is established successfully; otherwise, the TCP connection between the PCEP peers is broken. The session parameters included in the Open message are as follows: the PCEP version; sending time interval of Keepalive; aging time of a session; PCEP session ID; and PCEP capability set. For example, PCEP session type (stateful, stateless), whether the local end has Segment Routing capability, etc. PCC and PCE, by exchanging PCEP messages, complete session establishment, maintenance, path computation and update, etc. A PCEP message consists of a PCEP header and a variable-length message body, and the message body consists of one or more objects. The main contents of a PCEP message are carried by different objects.

Referring to FIG. 4, the process of establishing a PCEP session between PCEP peers is as follows.
(1) A TCP (Transmission Control Protocol) connection is established between PCEP peers.
(2) PCC sends an Open message to PCE.
(3) PCE sends an Open message to PCC.
(4) After receiving the Open message, PCE performs session parameters negotiation based on the information carried in the Open message. If the negotiation succeeds, a Keepalive message is sent for confirmation.
(5) After receiving the Open message, PCC performs session parameters negotiation based on the information carried in the Open message. If the negotiation succeeds, a Keepalive message is sent for confirmation.
(6) When both PCEP peers receive Keepalive messages from each other, it is considered that the PCEP session is established.

The Keepalive message is a PCEP message sent by PCC or PCE to keep the session active. The Keepalive message is further used to respond to the Open message to confirm that the Open message has been received and the PCEP session parameters carried in the Open message are acceptable. The Keepalive message does not carry any object, and the time interval for sending the Keepalive message is negotiated by means of the Keepalive sending time interval carried in the Open message. The time intervals for sending Keepalive messages between PCEP peers may be different. Any PCEP message has the function of keeping a session alive.

Various service applications meet the forwarding requirements of different service systems for a network by invoking relevant interfaces provided by a controller. For PCC and PCE, PCC is equivalent to a service application and PCE is equivalent to a controller.

In this embodiment, the forwarding path corresponding to the forwarding path issuing capability may be a segment routing tunnel, a segment routing policy, an ordinary MPLS tunnel, or other forwarding paths, the forwarding path corresponding to the forwarding path issuing capability is not limited in this embodiment.

At Step S20, when it is determined that both the path computation client and the path computation element support the forwarding path issuing capability based on time slices, a PCEP session for satellite network communication is established.

When both the path computation client and the path computation element are determined to support the time-slice-based forwarding path issuing capability based on the PCEP session initiation messages transmitted mutually between the path computation client and the path computation element in the session negotiation stage, the PCEP session for satellite network communication is established.

In this embodiment, in the session negotiation stage of the path computation client and the path computation element, by transmitting PCEP session initiation messages mutually between the path computation client and the path computation element, it is negotiated whether to support the forwarding path issuing capability based on time slices; and when it is determined that both the path computation client and the path computation element support the forwarding path issuing capability based on time slices, the PCEP session for satellite network communication is established.

The PCEP is extended, so that the PCE (Path Computation Element) and the PCC (Path Computation Client) can negotiate whether to support the forwarding path issuing capability based on time slices, after it is negotiated and confirmed that both the PCC and the PCE support the forwarding path issuing capability, the satellite network communication between the two sides is implemented based on the established PCEP session.

Therefore, the capability to issue path-forwarding information according to different time slices is provided, and the capability to negotiate time slices between a controller on a ground/high-orbit satellite and the satellite is provided. After succeed of capability negotiation, subsequent message exchange and information transmission between the path computation client and the path computation element can be carried out on the basis of the forwarding path issuing capability based on time slices.

In another embodiment of the satellite network communication method of the present application, the step of negotiating whether to support a forwarding path issuing capability based on time slices by exchanging PCEP session initiation messages includes: a target TLV packet is carried in a PCEP session initiation message, and it is negotiated whether to support a forwarding path issuing capability based on time slices; wherein the target TLV packet is pre-extended to form a target flag bit, and the target flag bit is used to indicate whether a path computation client or a path computation element supports the forwarding path issuing capability based on time slices.

In this embodiment, prior to the step of negotiating whether to support a forwarding path issuing capability based on time slices by exchanging PCEP session initiation messages, the method further includes: according to the periodic law of satellite movement, the satellite movement period is divided into several time slots [T0, T1, T2... Tn ], each time slot corresponds to one time interval (T0 is one time slot, corresponding to one time interval) with a begin time and an end time, such as [Begin Timestamp, End Timestamp], the network topology remains unchanged within one certain time slot Tx, and the dynamic network is mapped into time-discrete network snapshots.

In this embodiment, prior to the step of negotiating whether to support a forwarding path issuing capability based on time slices by exchanging PCEP session initiation messages, the method further includes: by extending the PCEP, the capability to issue path forwarding information according to different time slices and the capability to negotiate time slices between the controller on the ground/high-orbit satellite and the satellite are provided, so that the PCC and the PCE can negotiate on the time-slice-supported SR (Segment Routing) tunnel/SR (Segment Routing) Policy capability . The SR tunnel/SR Policy capability based on time slices refers to the capability by which a dynamic network is mapped into time-discrete network snapshots.

When it is negotiated whether to support forwarding path issuing capability based on time slices by exchanging PCEP session initiation message, the target TLV (Tag-Length-Value) message is used to negotiate whether to support the forwarding path issuing capability based on time slices. Wherein the target TLV packet is pre-extended to form the target flag bit therein, and the target flag bit is used to indicate whether the path computation client or the path computation element supports the forwarding path issuing capability based on time slices. Furthermore, SR-PCE-CAPABILITY sub-TLV or SRv6-PCE-CAPABILITY sub-TLV is carried in the OPEN message to achieve negotiation on whether to support the forwarding path issuing capability based on time slices, the T Flags are newly added to the two TLVs to indicate whether the PCC/PCE supports the SR tunnel/SR Policy capability based on time slices. The formats are as follows:
SR-PCE-CAPABILITY Sub-TLV Format: 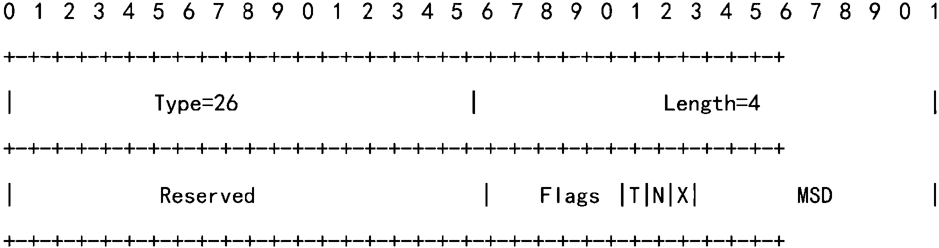
SRv6-PCE-CAPABILITY sub-TLV Format:

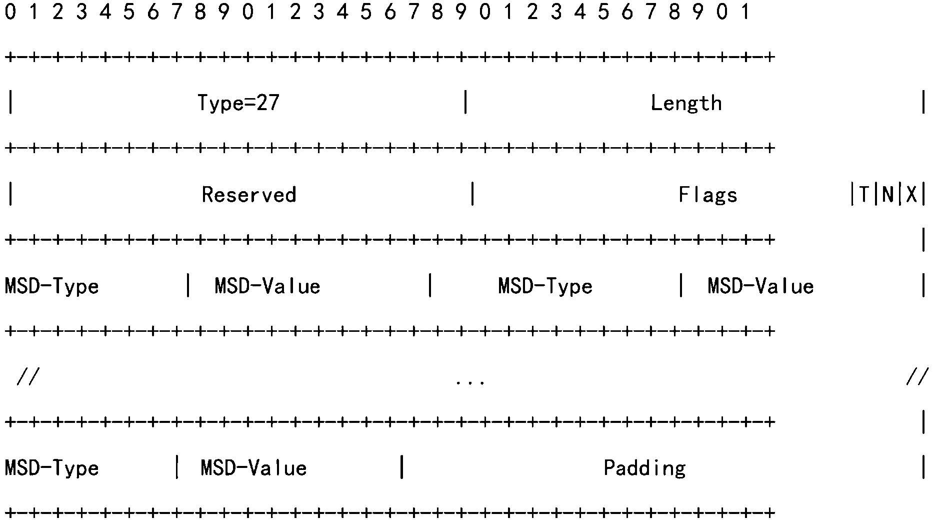

Exemplarily, negotiating whether to support a forwarding path issuing capability based on time slices includes: when it is determined that target flag bits of target TLV packets in PCEP session initiation messages of both the path computation client and the path computation element are preset flags respectively, the path computation client and the path computation element are determined to have negotiated to both support the forwarding path issuing capability based on time slices.

When the T Flags of the SR-PCE-CAPABILITY sub-TLV/SRv6-PCE-CAPABILITY sub-TLV in the OPEN messages of the PCC and PCE are both 1 1, capability negotiation succeeds, and then the PCC and PCE may exchange the SR tunnel/SR Policy capability based on time slices.

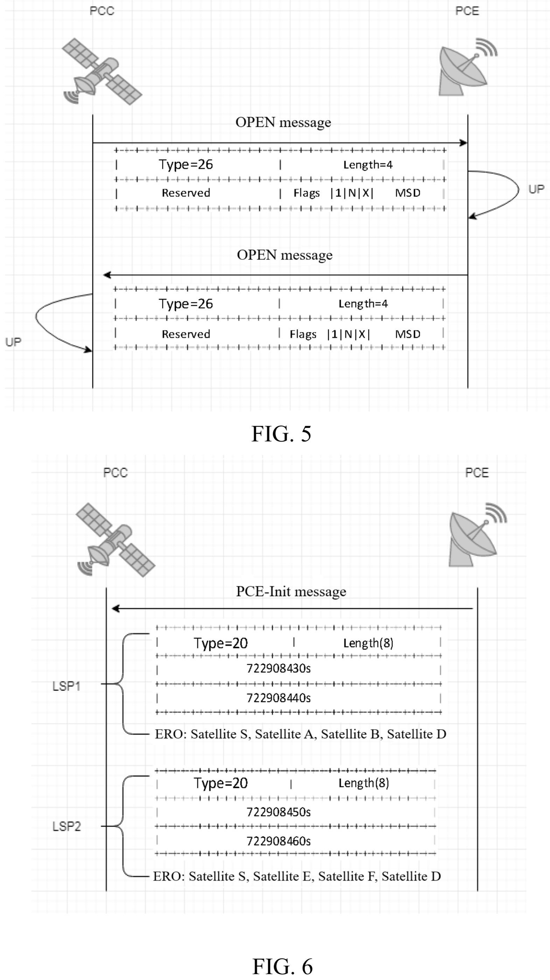

Referring to FIG. 5, in one embodiment, in a scenario where the satellite and the controller negotiate on support for the capability based on time slice, (1) the satellite supports the message forwarding capability based on time slices and initiates a capability negotiation mechanism with a ground controller or a high-orbit satellite controller; (2) an OPEN message in which the T Flags are set to 1 is formed, , and is sent to the ground controller or the high-orbit satellite controller; and (3) after the controller receives the OPEN message, if the capability is supported, a corresponding session enters the UP (upload) state, and relevant forwarding information may be sent to the satellite device subsequently.

In another embodiment of the satellite network communication method of the present application, the method further includes: corresponding to that the forwarding path issuing capability is issued or reported between the path computation client and the path computation element, time slot parameter information which is able to carry the forwarding path issuing capability is provided by means of extension.

In addition to providing the capability to issue path forwarding information according to different time slices by extending the PCEP, correspondingly, in this embodiment, corresponding time slot parameter information which supports carrying of the forwarding path issuing capability may be provided by extension. In one embodiment, when the SR tunnel/SR Policy is issued or reported between the PCC and the PCE, the time slot parameter information which is able to carry the SR tunnel/SR Policy is provided by extension.

Exemplarily, the step of providing the time slot parameter information which is able to carry the forwarding path issuing capability by means of extension includes: a timestamp TLV packet is added to a label switched path object which is carried in a label switched path initiate request message, a path state report message or a path update request message; wherein the timestamp TLV packet is used to designate the time slot parameter information, and the time slot parameter information at least includes a begin time and an end time of a valid period of the forwarding path issuing capability.

A PCInitiate (LSP Initiate Request) message, i.e., the label switched path initiate request message is a PCEP message sent by PCE to PCC to create LSP. The path through which FEC (Forwarding equivalence class) passes in the MPLS network is called an LSP (Label Switched Path), and the path is a unidirectional path from an ingress to an egress.

The PCRpt (Path Computation LSP State Report) message is a message sent by PCC to PCE to report the current state of LSP.

The PCUpd (Path Computation LSP Update Request) message is a PCEP message sent by PCE to PCC to update LSP information.

When the time slot parameter information which is able to carry the forwarding path issuing capability is provided by extension, the timestamp TLV packet is added to the label switched path object which is carried in the label switched path initiate request message, path state report message or path update request message. Furthermore, one Time-Slot TLV is added to the LSP Object to designate the time slot parameter corresponding to validity ofthe SR tunnel/SR Policy. The Time-Slot TLV is a newly created and newly proposed in this embodiment to support "mapping a dynamic network into time-discrete network snapshots", and its specific format is as follows:

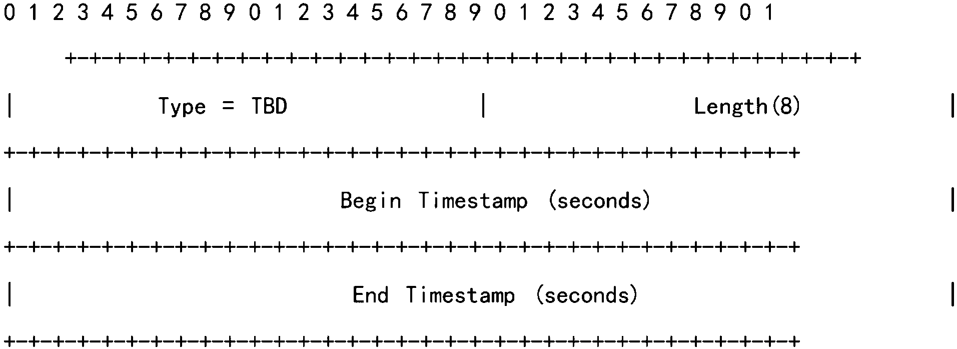

The Begin Timestamp carries the begin time of a valid period of the SR TE (Traffic Engine) tunnel/SR Policy, and the End Timestamp carries the end time of the valid period of the SR TE tunnel/SR Policy. The unit is seconds, and the value thereof represents the number of seconds that have passed since January 1, 1970.

In another embodiment of the satellite network communication method of the present application, the method further includes: after a label switched path initiate request message is received by the path computation client from the path computation element, the label switched path initiate request message is parsed to obtain timeslot parameter information; and when a valid period of the forwarding path issuing capability is determined to end based on the time slot parameter information, a path corresponding to the label switched path initiate request message is determined to be invalid.

In this embodiment, there is provided a method for determining an aging path according to time slot parameters. After the path computation client receives the label switched path initiate request message from the path computation element, the label switched path initiate request message is parsed to obtain timeslot parameter information; and then, when it is determined that a valid period of the forwarding path issuing capability ends based on the time slot parameter information, a path corresponding to the label switched path initiate request message is determined to be invalid.

Referring to FIG. 6, in one embodiment, that a controller issues an SR-MPLS TE tunnel by PCEP is taken as an example for description. (1) The controller calculates the path between the satellite S and the satellite D based on the topology with time information collected at a certain time. Assume that the calculated result is as follows, the path in the T1 time slice is: satellite S to satellite A to satellite Bto satellite D; and the path in the T2 time slice is: satellite S to satellite E to satellite F to satellite D. (2) The controller issues to the tunnel head node satellite S the tunnel triples (source address, destination address, ID), valid period, and path information by the PCInit message of PCEP. The specific packet format is as follows:

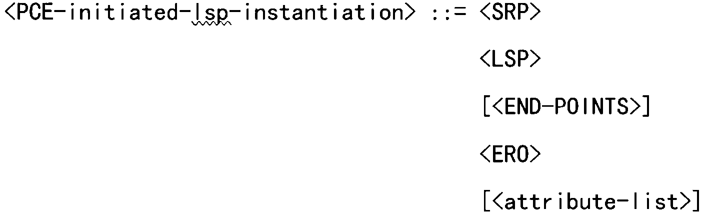

The Time-Slot TLV is carried in the <LSP> object, and the path information of the SR-TE tunnel is carried in the <ERO> object. (3) The satellite S receives the PCInit message issued by the controller and issues the tunnel path information to the forwarding plane to guide forwarding, the tunnel life period parameter issued by the controller is parsed, to start the tunnel status aging timer. When the valid period ends, the path becomes invalid and is no longer used for forwarding.

In another embodiment, that the controller issues SRv6-POLICY is taken as an example for description, which is similar to the steps shown in FIG. 6, except that the packet formats are different. (1) The controller calculates the path between the satellite S and satellite D based on the topology with time information collected at a certain time. Assume that the calculated result is as follows, the path in the T1 time slice is: satellite S to satellite A to satellite B to satellite D; and the path in the T2 time slice is: satellite S to satellite E to satellite Fto satellite D. (2) The controller issues to the tunnel head node satellite S the color, endpoint, valid period, and path information of the SRv6 Policy by the PCInit message of PCEP. The specific packet format is as follows:

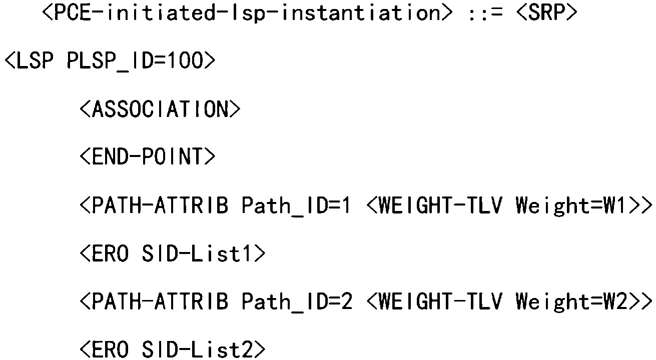

The Time-Slot TLV is carried in the <LSP> object, and the path information of the SRv6 Policy is carried in the <ERO> object. (3) The satellite S receives the PCInit message issued by the controller and issues the tunnel path information to the forwarding plane to guide forwarding. The tunnel life period parameter issued by the controller is parsed, to start the tunnel status aging timer. When the valid period ends, the path becomes invalid and is no longer used for forwarding.

In another embodiment of the satellite network communication method of the present application, the method further includes: when the path computation element determines a link failure, a time slice where a failed link is located is determined and the number of link failures in the time slice is computed; and when it is determined that the number of link failures exceeds a preset threshold, a forwarding path issuing capability passing through the failed link within the time slice is adjusted, and an adjusted forwarding path issuing capability is sent to the path computation client by means of a path update request message.

In this embodiment, there is provided a method for adjusting a failed link. The time slice where the failed link is located is determined and the number of link failures in the time slice is calculated, and when it is determined that the number of link failures exceeds a preset threshold, the forwarding path issuing capability passing through the failed link within the time slice is adjusted, and the adjusted forwarding path issuing capability is sent to the path computation client by a path update request message.

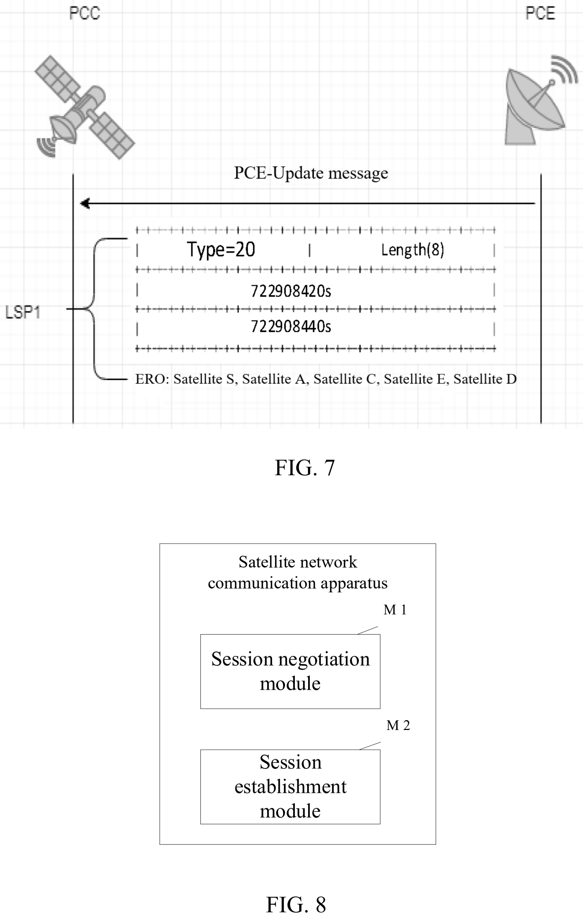

Referring to FIG. 7, in one embodiment, when a problem occurring in a laser link of the satellite is reported to the controller, the controller recalculates path information of the tunnel or SR Policy passing through the link within the time slice according to the time slice where the problematic link is located, and then issues the calculated path information to the satellite device. In some cases, the steps are as follows.
(1) The controller receives a notification of link failure and checks the time slice in which the link is located.
(2) The number NUM of link failures in the time slice is calculated.
(3) The failure policy processing mechanism in the controller is checked, if the threshold M is exceeded, that is, NUM > M, the path recalculation mechanism is started to adjust the tunnel or SRv6 Policy path that passes through the link within the time slice.
(4) Adjustment information is sent to satellite devices by PCE-Update message.

In conclusion, in current space-air-ground integrated satellite communications, forwarding information cannot be accurately issued within different time slices, and forwarding information within a certain time slice cannot be updated. According to the present application, one type of TLV is reformed and a new Time-Slot TLV is proposed, so that conventional PCEP technology can be combined "mapping a dynamic network into time-discrete network snapshots", thereby (1) avoiding the risks of low capacity of the satellite and incapability of dynamic path computation; (2) solving the conflict of forwarding paths within different time slices; (3) enabling timely adjustment of forwarding paths of the satellite and improving the routing reliability; and (4) facilitating the control over low-orbit satellites by ground/high-orbit satellite controllers. In summary, the present invention solves the technical problem in conventional technology that it is difficult to implement information transmission in satellite communication, and implements information transmission in satellite communication.

Referring to FIG. 8, an embodiment of the present application further provides a satellite network communication apparatus, the satellite network communication apparatus includes: a session negotiation module M1, configured to negotiate whether to support a forwarding path issuing capability based on time slices by transmitting PCEP session initiation messages mutually between a path computation client and a path computation element in a session negotiation stage of the two; and a session establishment module M2, configured to establish, upon the condition that both the path computation client and the path computation element are determined to support the forwarding path issuing capability based on time slices, a path computation element communication protocol called PCEP session for satellite network communication.

Exemplarily, the session negotiation module is further used to: carry a target TLV packet in a PCEP session initiation message, and negotiate whether to support a forwarding path issuing capability based on time slices; wherein the target TLV packet is pre-extended to form a target flag bit, and the target flag bit is configured to indicate whether a path computation client or a path computation element supports the forwarding path issuing capability based on time slices.

Exemplarily, the session negotiation module is further used to: determine, upon the condition that target flag bits of target TLV packets in PCEP session initiation messages of both the path computation client and the path computation element are determined to comprise preset flags, that the path computation client and the path computation element have negotiated to both support the forwarding path issuing capability based on time slices.

Exemplarily, the satellite network communication apparatus further includes an extension module, which is used to: provide, corresponding to that the forwarding path issuing capability is issued or reported between the path computation client and the path computation element, time slot parameter information, which is able to carry the forwarding path issuing capability, by means of extension.

Exemplarily, the extension module is further used to: add a timestamp TLV packet to a label switched path object which is carried in a label switched path initiate request message, a path state report message or a path update request message; wherein the timestamp TLV packet is configured to designate the time slot parameter information, and the time slot parameter information at least comprises a begin time and an end time of a valid period of the forwarding path issuing capability.

Exemplarily, the satellite network communication apparatus further includes a failure module, which is used to: parse, after a label switched path initiate request message is received by the path computation client from the path computation element, the label switched path initiate request message to obtain timeslot parameter information; and determine, upon the condition that a valid period of the forwarding path issuing capability is determined to end based on the time slot parameter information, a path corresponding to the label switched path initiate request message to be invalid.

Exemplarily, the satellite network communication apparatus further includes an adjustment module, which is used to: determine, upon the condition that the path computation element determines a link failure, a time slice where a failed link is located and computing a number of link failures in the time slice; and adjust, upon the condition that the number of link failures is determined to exceed a preset threshold, a forwarding path issuing capability passing through the failed link within the time slice, and sending adjusted forwarding path issuing capability to the path computation client by means of a path update request message.

The satellite network communication apparatus provided by the present application adopts the satellite network communication method in the above-mentioned embodiments, so as to solve the technical problem that it is difficult to implement information transmission in satellite communication in conventional technology. Compared with the prior art, the beneficial effects of the satellite network communication apparatus provided by the embodiments of the present application are the same as the beneficial effects of the satellite network communication method provided by the above-mentioned embodiments, and other technical features in the satellite network communication apparatus are the same as the features disclosed in the above-mentioned embodiment method, which will not be repeated here.

In addition, embodiments of the present application further provide a satellite network communication device, the satellite network communication device includes a memory, a processor, and a computer program stored on the memory and executable on the processor, the computer program is configured to implements steps of the above-mentioned satellite network communication method.

In addition, embodiments of the present application further provide a computer-readable storage medium, the computer-readable storage medium stores a computer program, the computer program is configured to implements steps of the satellite network communication method.

It should be noted that, as used herein, the terms "include", "comprise" or any other variations thereof are intended to cover a non-exclusive inclusion, such that a process, method, article, or system that comprises a series of elements not only comprises those elements, but also comprises other elements that are not explicitly listed, or further comprises elements that are inherent to the process, method, article, or system. Without further limitations, an element limited by "comprising a..." does not exclude the presence of other identical elements in the process, method, article, or system that comprises the element.

With the description of the above implementations, those skilled in the art can clearly understand that the above implementation methods can be effected via software and necessary general hardware platforms, as well as hardware, in many cases, the former is the preferred implementation. Based on such understanding, the technical solution of the this application essentially or the part contributing to the prior art may be embodied in the form of a software product, the computer software product is stored in a storage medium as mentioned above (such as a ROM/RAM, a magnetic disk, and an optical disk), and includes a number of instructions for instructing a terminal device (which may be a mobile phone, a computer, a server, or a network device) to execute the methods described in various embodiments of this application.

The above are merely optional embodiments of this application, and are not intended to limit the scope of this application, any equivalent structures or equivalent process changes that are made using the content of this application and the accompanying drawings, or techniques that are directly or indirectly applied in other related technical fields, are equally included in the scope of patent protection of this application.

## Claims

1. A satellite network communication method, comprising:
negotiating whether to support a forwarding path issuing capability based on time slices by transmitting PCEP session initiation messages mutually between a path computation client and a path computation element in a session negotiation stage of the two; and
establishing, upon the condition that both the path computation client and the path computation element are determined to support the forwarding path issuing capability based on time slices, a path computation element communication protocol called PCEP session for satellite network communication.

2. The satellite network communication method of claim 1, wherein negotiating whether to support the forwarding path issuing capability based on time slices by transmitting PCEP session initiation messages mutually comprises:
carrying a target tag-length-value called TLV packet in a PCEP session initiation message, and negotiating whether to support the forwarding path issuing capability based on time slices;
wherein the target TLV packet is pre-extended to form a target flag bit, and the target flag bit is configured to indicate whether a path computation client or a path computation element supports the forwarding path issuing capability based on time slices.

3. The satellite network communication method of claim 1 or 2, wherein negotiating whether to support the forwarding path issuing capability based on time slices comprises:
determining, upon the condition that target flag bits of target TLV packets in PCEP session initiation messages of both the path computation client and the path computation element are determined to comprise preset flags, that the path computation client and the path computation element have negotiated to both support the forwarding path issuing capability based on time slices.

4. The satellite network communication method of claim 1, wherein the method further comprises:
providing, corresponding to that the forwarding path issuing capability is issued or reported between the path computation client and the path computation element, time slot parameter information, which is able to carry the forwarding path issuing capability, by means of extension.

5. The satellite network communication method of claim 4, wherein providing the time slot parameter information, which is able to carry the forwarding path issuing capability, by means of extension comprises:
adding a timestamp TLV packet to a label switched path object which is carried in a label switched path initiate request message, a path state report message or a path update request message;
wherein the timestamp TLV packet is configured to designate the time slot parameter information, and the time slot parameter information at least comprises a begin time and an end time of a valid period of the forwarding path issuing capability.

6. The satellite network communication method of claim 1, wherein the method further comprises:
parsing, after a label switched path initiate request message is received by the path computation client from the path computation element, the label switched path initiate request message to obtain timeslot parameter information; and
determining, upon the condition that a valid period of the forwarding path issuing capability is determined to end based on the time slot parameter information, a path corresponding to the label switched path initiate request message to be invalid.

7. The satellite network communication method of claim 1, wherein the method further comprises:
determining, upon the condition that the path computation element determines a link failure, a time slice where a failed link is located and computing a number of link failures in the time slice; and
adjusting, upon the condition that the number of link failures is determined to exceed a preset threshold, a forwarding path issuing capability passing through the failed link within the time slice, and sending adjusted forwarding path issuing capability to the path computation client by means of a path update request message.

8. A satellite network communication apparatus, comprising:
a session negotiation module, configured to negotiate whether to support a forwarding path issuing capability based on time slices by transmitting PCEP session initiation messages mutually between a path computation client and a path computation element in a session negotiation stage of the two; and
a session establishment module, configured to establish, upon the condition that both the path computation client and the path computation element are determined to support the forwarding path issuing capability based on time slices, a path computation element communication protocol called PCEP session for satellite network communication.

9. A satellite network communication device, comprising a memory, a processor, and a computer program stored on the memory and executable on the processor, wherein the program, when executed by the processor, implements steps of the satellite network communication method of any one of claims 1 to 7.

10. A computer-readable storage medium, wherein the computer-readable storage medium stores a computer program, the computer program, when executed by a processor, implements steps of the satellite network communication method of any one of claims 1 to 7.
